# EUROPÄISCHE PATENTSCHRIFT

(11) **EP 1 961 290 B1**
(45) Veröffentlichungstag und Bekanntmachung des Hinweises auf die Patenterteilung: **08.07.2009**
(21) Anmeldenummer: 08002851.7
(22) Anmeldetag: 15.02.2008
(51) Int. Cl.: A01G 3/02, B26B 13/16

(54) **Verriegelungsvorrichtung für Scheren**
Locking device for scissors
Dispositif de verrouillage pour ciseaux

(30) Priorität: 22.02.2007 DE 102007008763
(43) Veröffentlichungstag der Anmeldung: 27.08.2008
(73) Patentinhaber: Wolf-Garten GmbH & Co. KG, 57518 Betzdorf (DE)
(72) Erfinder: Staudt, Gerhard, 66839 Schmelz (DE)
(74) Vertreter: Koch, Günther

(56) Entgegenhaltungen:
- WO-A-99/27767
- DE-A1- 19 832 896
- DE-U1- 9 110 672
- DE-U1-0202004 013 55

## Beschreibung

Die Erfindung betrifft eine Verriegelungsvorrichtung für Scheren, insbesondere für Gartenscheren.

Derartige Verriegelungsvorrichtungen dienen allgemein dazu, die Scheren bei Nichtgebrauch gegen ein unbeabsichtigtes Öffnen und gegen eine Verletzungsgefahr weitgehend zu schützen. Der geringe Raumbedarf im geschlossenen Zustand erleichtert die Handhabung, die Ablage und den Transport.

Die Verriegelungsstellung ist gleichzeitig die Bereitschaftsstellung, in der die Scherengriffe bequem mit einer Hand erfasst werden können, um nach Lösen der Verriegelung, was mit der gleichen Hand bewirkt werden sollte, die Schere zum Schneiden bereitzuhalten.

Diese Forderungen sind im Allgemeinen dann erfüllt, wenn im geschlossenen Zustand die beiden Spitzen der Scherenschenkel nahe aneinander liegen und die Griffschalen einhändig bequem umschlossen werden können.

Die Erfindung geht aus von einer Verriegelungsvorrichtung der im Oberbegriff des Anspruchs 1 angegebenen Gattung. Eine Gartenschere mit einer derart ausgebildeten Verriegelungsvorrichtung ist aus der DE 20 2004 013 550 U1 bekannt. Hierbei greift in Verriegelungsstellung ein als Verriegelungsblock ausgebildeter Schieber in eine als Parallelschlitz ausgebildete Verriegelungsausnehmung des Gegenstückes ein. Die Schließstellung ist durch die Flankenberührung der linear relativ zueinander bewegten Glieder festgelegt.

Die an moderne Gartenscheren zu stellenden Forderungen bezüglich der Verriegelung gehen jedoch noch weiter. Insbesondere bei den Amboss-Scheren, bei denen die Schneidkante eines Schneidmessers mit einem Amboss des anderen Scherenschenkels zusammenwirkt, besteht die Forderung, dass die Schneidkante dem Amboss lichtspaltfrei anliegt. Fertigungstechnisch bedingte Toleranzen, aber auch ein sich während des Gebrauchs einstellender Verschleiß und ein Nachschleifen des Schneidmessers der Schere führen häufig dazu, dass sich in der Schließstellung ein paralleler oder keilförmiger Lichtspalt zeigt, was die Schneidleistung der Schere nicht notwendigerweise beeinträchtigen muss, aber vom Benutzer der Schere häufig als Mangel angesehen wird.

Dieses Problem der "Lichtspaltvermeidung" tritt zwar bei zweischneidigen Bypass-Scheren nicht auf, jedoch kann auch bei diesen ein unerwünschtes Spiel auftreten, wenn zu große Maß-Toleranzen in den Scherenpuffern liegen oder diese nicht genügend einfedern können.

Die genannten Probleme treten vornehmlich bei Gartenscheren auf, sie können sich jedoch auch bei anders gearteten Scheren zeigen, die durch Federkraft in die Öffnungsstellung überführt und durch eine Verriegelungsvorrichtung in der Schließstellung gehalten werden, so dass die Erfindung auch auf Scheren anderer vergleichbarer Art anwendbar ist.

Um dennoch diesen eventuell vorhandenen Lichtspalt zwischen Amboss und Messer zu beseitigen, muss innerhalb der Scherenkonstruktion eine Ausgleich- und Verstellmöglichkeit vorgegeben sein, was durch die Forderung nach einem optimalen Schneidablauf zusätzlich noch geboten ist.

Es ist bekannt, bei der Fertigung oder einer eventuellen Reparatur/beim Nachschleifen die relative Stellung durch eine lageorientierte Angleichung des Ambosses zur Schneidkante zu verstellen. Dies bedingt jedoch, dass die Schere etwas mehr oder weniger geschlossen werden muss, damit Messer und Amboss auf ihrer gesamten Länge aufliegen. Die üblichen Scheren-Verriegelungsvorrichtungen mit Zuhaltungen, die auf eine ganz bestimmte Einrastposition fixiert sind, können ein derartiges lichtspaltfreies Schließen nicht gewährleisten.

Der Erfindung liegt daher die Aufgabe zugrunde, eine Scheren-Verriegelungsvorrichtung der eingangs genannten Art zu schaffen, die einen einfachen Aufbau aufweist und ein vollständiges und lichtspaltfreies Schließen auch nach längerem Gebrauch und/oder Nachschleifen gewährleistet.

Gelöst wird die gestellte Aufgabe durch die im Kennzeichnungsteil des Patentanspruchs 1 angegebenen Merkmale.

Vorteilhafte Ausgestaltungen und Weiterbildungen der Erfindung ergeben sich aus den Unteransprüchen.

Durch die Erfindung wird bei einfachem Aufbau erreicht, dass, weitestgehend unabhängig von Fertigungstoleranzen und im Betrieb auftretendem Verschleiß, die Schere durch die Verriegelungsvorrichtung immer im voll geschlossenen Zustand verriegelt werden kann, d.h. bei einer Amboss-Schere wird stets eine lichtspaltfreie Verriegelung gewährleistet, und bei einer zweischneidigen Schere können die Messerspitzen immer optisch genau ausgerichtet in die Schließstellung überführt sein.

Zudem ist es möglich, durch Nachjustieren des Schneidmessers im Zusammenspiel mit dem Amboss einen längerfristigen lichtspaltfreien Zustand im verriegelten Zustand herbeizuführen.

Bei der erfindungsgemäßen Verriegelungsvorrichtung wird die Zuhaltung durch einen Schieber oder langgestreckten Arretierbolzen gebildet, der entlang seiner Längsachse in einer Bohrung in dem ersten Scherenschenkel derart verschiebbar angeordnet ist, dass ein vorderer Rastabschnitt des Arretierbolzens in der Schließstellung der Schere in die Rastkerbe einschiebbar ist.

Der Arretierbolzen weist vorzugsweise die Form eines Drehteils auf, der kann ggf. jedoch auch ein flächiges Bauteil sein.

Am vorderen Ende des Arretierbolzens befindet sich ein zylindrischer oder schwach konischer Rastabschnitt, der passgenau in die Rastkerbe eines mit dem zweiten Scherenschenkel verbundenen Teils während des Schließvorgangs zum Sperren der Öffnungsbewegung verschiebbar ist.

Gemäß einer Ausgestaltung der Erfindung weist der Arretierbolzen an dem einen, der Rastkerbe zugewandten, Ende einen Kegelstumpf-Abschnitt auf, und er wird in zwei in einer Ebene achsparallel versetzt liegenden Bohrungsabschnitten geführt, wobei das eine Ende des Arretierbolzens bei axialer Verschiebung eine Drehbewegung, hervorgerufen durch die Kegelschräge, um den Mittelpunkt seines anderen kugelförmig ausgebildeten Endes erfährt.

Gemäß einer weiteren Ausgestaltung der Erfindung kann die Bohrung erste und zweite Bohrungsabschnitte mit ersten bzw. zweiten Mittelachsen umfassen, die in einer zur Gelenkachse unter einem rechten Winkel stehenden und sich durch den ersten Scherenschenkel erstreckenden Ebene achsparallel derart versetzt angeordnet sind, dass die Verlängerung der Mittelachse des ersten Bohrungsabschnittes einen größeren Abstand von der Gelenkachse aufweist als der zweite Bohrungsabschnitt. Der Arretierbolzen umfasst einen Schaft mit einem von der Gelenkachse abgewandten hinteren, im Wesentlichen kugelförmigen Ende mit einem Außendurchmesser, der im Wesentlichen dem Innendurchmesser des zweiten Bohrungsabschnittes entspricht, und einen vorderen Rastabschnitt, der mit Radialspiel in dem ersten Bohrungsabschnitt angeordnet und mit dem Schaft über einen sich leicht konisch erweiternden Übergangsabschnitt verbunden ist. Der Übergangsabschnitt läuft beim Vorschub des Arretierbolzens in die Rastkerbe über die zwischen den ersten und zweiten Bohrungsabschnitten gebildete Übergangskante oder Stufe derart hinweg, dass der Arretierbolzen um eine zur Gelenkachse parallele Achse des kugelförmigen Endes verschwenkt wird und die Spitze des Rastabschnittes gegen eine Kante der Rastkerbe gedrückt wird, um die Schere in die Schließstellung vorzuspannen.

Der an die Stufe angrenzende Teil des vorderen Bohrungsabschnitts kann rampenartig ausgebildet sein, wobei der sich leicht konisch erweiternde Übergangsabschnitt des Arretierbolzens stärker konisch ausgestaltet ist als die Rampe und einen Kontaktpunkt mit der Rampe aufweist.

Das im Wesentlichen kugelförmige Ende dient dazu, ein Verschwenken oder die Winkelbewegung des Arretierbolzens um sein hinteres Ende in dem hinteren Bohrungsabschnitt in einer zur Gelenkachse unter einem rechten Winkel stehenden Ebene zu ermöglichen. Entsprechend kann dieses kugelförmige Ende auch beispielsweise eine gegebenenfalls ballige Walzenform aufweisen, insbesondere dann, wenn der Arretierbolzen als flächiges Bauteil ausgebildet ist.

Vorzugsweise wird am hinteren, im Wesentlichen kugelförmigen Ende des Arretierbolzens eine Haftreibung hervorgerufen, um die Verriegelung zu unterstützen.

Dies kann beispielsweise dadurch erreicht werden, dass das im Wesentlichen kugelförmige Ende als elastisch verformbares Kunststofflagerende ausgebildet ist, um die Winkelbewegung des Arretierbolzens zu ermöglichen. Alternativ kann der zweite Bohrungsabschnitt entsprechend ausgekleidet sein.

Der erste Berührungspunkt der Rastkerbe mit dem Rastabschnitt ist vorzugsweise abgerundet, um den Eintritt des Arretierbolzens in die Rastkerbe zu erleichtern.

Der Arretierbolzen kann durch geeignete Betätigungseinrichtungen verschiebbar sein, die seitlich oder an der Oberkante des betreffenden Scherenschenkels angeordnet sind.

Nachstehend wird ein Ausführungsbeispiel der Erfindung anhand der Zeichnung beschrieben. In der Zeichnung zeigen:
Figur 1 zeigt eine Amboss-Schere im geschlossenen, jedoch unverriegelten Zustand;
Figur 2 stellt einen Zwischenschritt bei der Verriegelung der Schere nach Figur 1 dar;
Figur 3 zeigt die Schere in vollständig geschlossenem und verriegeltem Zustand;
Figuren 4a bis 4c zeigen in größerem Maßstab Teilansichten der Verriegelungsvorrichtung in den Stellungen nach den Figuren 1 bis 3;
Figur 5a zeigt eine Schnittansicht eines Schiebeknopfes mit daran befestigten Arretierbolzen, geschnitten nach der Linie A-A gemäß Figur 5b;
Figur 5b zeigt eine Draufsicht des Schiebeknopfes mit Arretierbolzen;
Figur 5c ist eine perspektivische Ansicht des Schiebeknopfes mit dem daran befestigten Arretierbolzen.

Die Zeichnung zeigt ein bevorzugtes Ausführungsbeispiel der Erfindung anhand einer Amboss-Schere. Die Erfindung ist jedoch auch auf sogenannte Bypass-Scheren anwendbar, bei denen das obere Messer an dem unteren Messer vorbeigleitet.

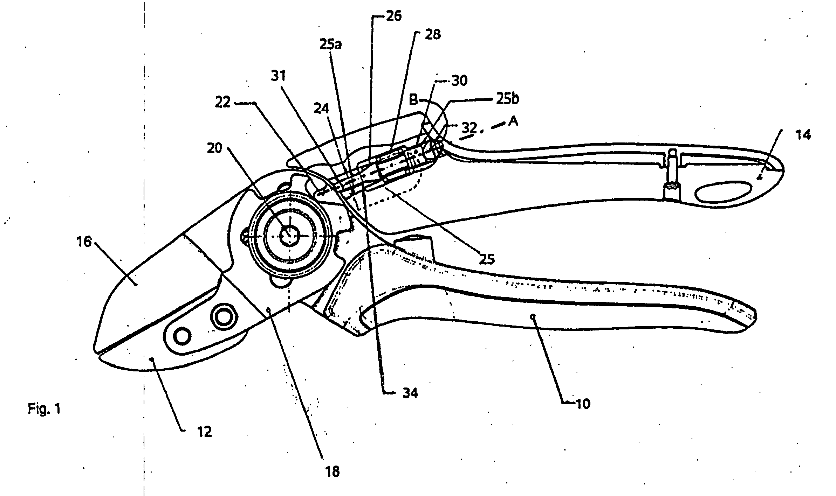

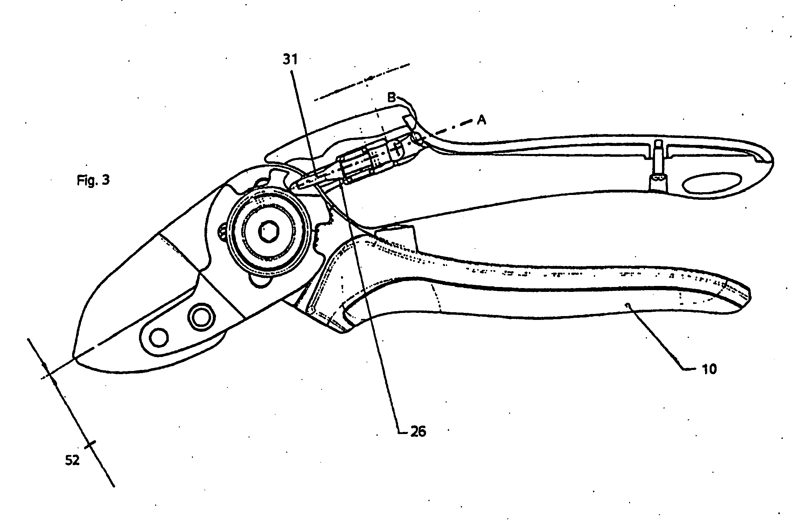

Die in den Figuren 1 und 3 dargestellte Amboss-Schere weist einen ersten Scherenschenkel 14 mit einem Amboss-Halter 18 und einem daran verstellbar angeordneten Amboss 12 und einen zweiten Scherenschenkel 10 mit einem mit dem Amboss zusammenwirkenden Messer 16 auf. Die beiden Scherenschenkel 10 und 14 sind über eine Gelenkachse 20 miteinander verbunden. Eine nicht dargestellte Öffnungsfeder wirkt im Sinne eines Öffnens der Schere.

Durch die im Folgenden beschriebene Verriegelungsvorrichtung wird die Schere entgegen der Kraft der Öffnungsfeder lichtspaltfrei in Schließstellung gehalten.

Diese Verriegelungsvorrichtung wird durch eine Handhabe betätigt, die beidseitig am ersten Scherenschenkel 14 einen Schiebeknopf 28, 29 zur Verschiebung eines Arretierbolzens 30 aufweist, der mit einer Rastkerbe 22 im Messer 16 oder einem mit diesem verbundenen Teil zusammenwirkt. Das Messer 16 ist um die Gelenkachse 20 gelagert, und es ist mit dem Vorderabschnitt des Scherenschenkels 10 verschraubt, vernietet oder auf andere Weie formschlüssig verbunden. Die Rastkerbe 22 weist eine abgerundete Nockenfläche auf, die den Eingriff des Arretierbolzens 30 erleichtert.

Der Arretierbolzen 30 ist entlang siner Längsachse A in einer Bohrung 25 in dem ersten Scherenschenkel 14 derart verschiebbar angeordnet, dass sein vorderer Rastabschnitt 31 in der Schließstellung der Schere in die Rastkerbe 22 einschiebbar ist.

Das der Rastkerbe 22 zugewandte vordere Ende des Arretierbolzens 30 ist abgerundet oder konisch ausgebildet und passgenau in die Rastkerbe 22 einschiebbar, um die Schere luftspaltfrei zu verriegeln. Der Arretierbolzen 30 weist am Übergang zum Rastabschnitt 31 kleineren Durchmessers einen Kegelabschnitt 26 auf, und er wird in zwei in einer Ebene achsparallel versetzt liegenden Bohrungsabschnitten 25a, 25b geführt, wobei das hintere Ende 32 des Arretierbolzens 30 bei axialer Verschiebung um eine zur Gelenkachse 20 parallele Achse B verschwenkt wird und die Spitze seines Rastabschnittes 31 gegen eine Kante der Rastkerbe 22 gedrückt wird, um die Schere in ihre Schließstellung vorzuspannen.

Diese Verschwenkung wird bei der dargestellten Ausführungsform dadurch erreicht, dass die Bohrung 25 erste und zweite Bohrungsabschnitte 25a, 25b mit ersten bzw. zweiten Mittelachsen umfasst, die in einer zur Gelenkachse 20 unter einem rechten Winkel stehenden und sich durch den ersten Scherenschenkel erstreckenden Ebene achsparallel um einen Achsversatz 24 derart versetzt angeordnet sind, dass die Verlängerung der Mittelachse des ersten Bohrungsabschnittes 25a einen größeren Abstand von der Gelenkachse 20 aufweist als die Achse des zweiten Bohrungsabschnittes 25b.

Der Arretierbolzen 30 umfasst einen Schaft mit einem von der Gelenkachse 20 abgewandten hinteren kugelförmigen Ende 32 mit einem Außendurchmesser, der im Wesentlichen dem Innendurchmesser des zweiten Bohrungsabschnittes 25b entspricht, und einen vorderen Rastabschnitt 31, der mit Radialspiel in dem ersten Bohrungsabschnitt 25a angeordnet und mit seinem Schaft über den Kegelabschnitt 26 verbunden ist. Dieser Kegelabschnitt 26 läuft beim Vorschub des Arretierbolzens 30 in die Rastkerbe 22 über die zwischen den ersten und zweiten Bohrungsabschnitten 25a, 25b gebildete Stufe 34, so dass der Arretierbolzen 30 um eine zur Gelenkachse 20 parallele Achse B des kugelförmigen Endes 32 verschwenkt wird und die Spitze des Rastabschnittes 31 gegen eine Kante der Rastkerbe 22 gedrückt wird, um die Schere in die Schließstellung vorzuspannen.

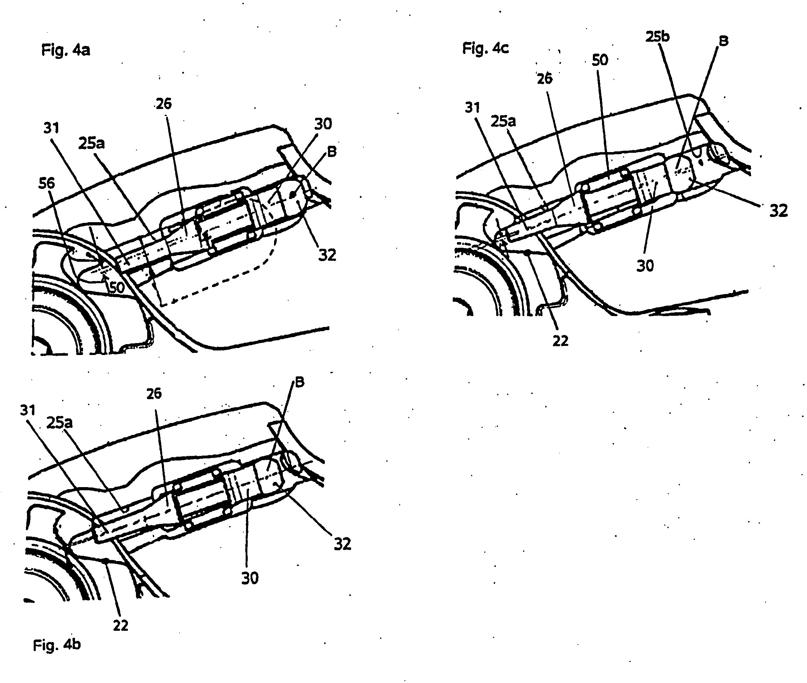

Wie insbesondere aus den Figuren 4a bis 4c ersichtlich, ist der an die Stufe angrenzende Teil des vorderen Bohrungsabschnitts 25a rampenartig ausgebildet, wobei der Kegelabschnitt 26 des Arretierbolzens 30 stärker konisch ausgestaltet ist als die Rampe und damit einen Kontaktpunkt mit der Rampe aufweist.

Am hinteren kugelförmigen Ende 32 des Arretierbolzens 30 besteht eine Haftreibung, um die Verriegelung zu verbessern. Dies kann dadurch erreicht werden, dass das kugelförmige Ende 32 als verformbares Kunststofflagerende ausgebildet ist, um die Winkelbewegung des Arretierbolzens zu ermöglichen. Alternativ kann der zweite Bohrungsabschnitt 25b entsprechend ausgekleidet sein.

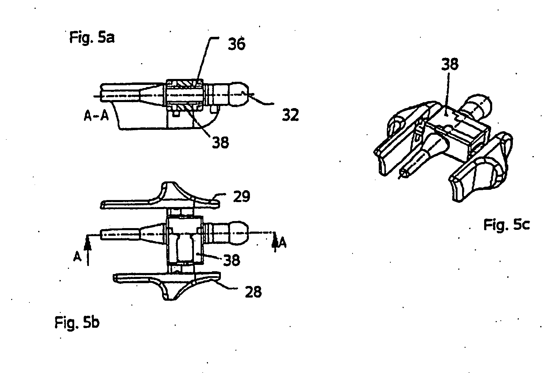

In den Figuren 5a bis 5c ist die Betätigung des Arretierbolzens 30 näher dargestellt.

Der Arretierbolzen 30 ist an einem sich quer zur Ebene des ersten Scherenschenkels 14 erstreckenden Block 38 befestigt, der mit den Schiebeknöpfen 28, 29 über Rastnocken verbunden ist.

Der Block 38 ist in einem Freiraum 36 schwenkbar beweglich an den Schiebeknöpfen 28, 29 angeordnet, und der Arretierbolzen 30 kann zusätzlich oder alternativ in dem Block 38 schwenkbar befestigt sein.

Die Schiebeknopf-Anordnung ist zweiteilig und besitzt nicht dargestellte Rastnocken zur Zwangsfixierung der Zuhaltung in der Endlage. Bei anderen Ausführungsformen kann der Schiebeknopf auch einteilig ausgeführt sein.

Der Schiebeknopf 28, 29 ist bei dem dargestellten Ausführungsbeispiel so angeordnet, dass er einhändig mit dem Daumen der die Schere umfassenden rechten oder linken Hand betätigt werden kann. Er könnte jedoch auch auf der Oberkante des betreffenden Scherenschenkels angeordnet sein.

Die Funktionsweise der Verriegelungsvorrichtung wird nachfolgend anhand der Figuren 1 bis 3 und der entsprechenden vergrößerten Teilansichten nach den Figuren 4a bis 4c näher erläutert.

In Figur 1 ist die Verriegelungsvorrichtung in geschlossener, aber unverriegelter Lage dargestellt, wobei der Arretierbolzen 30 in seiner hinteren Position angeordnet ist, abgestützt durch das kugelförmige Ende 32 in dem hinteren Bohrungsabschnitt 25b einerseits und den vor dem konischen Übergangsabschnitt oder Kegelstumpf 26 liegenden zylindrischen Rastabschnitt 31 auf der Stufe 34 andererseits, die durch den vorderen achsparallelen Bohrungsabschnitt an der Stufe zum hinteren Bohrungsabschnitt 25b gebildet wird.

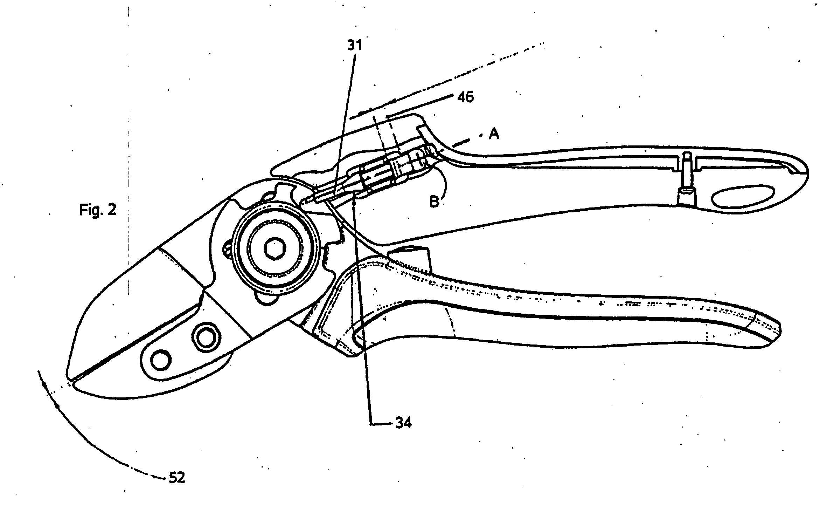

Sobald gemäß Figur 2 und Figur 4b der Block 38 um ein Teilstück 46 des Gesamtschiebeweges nach vorne geschoben ist, steht ein Spielraum 50 für einen funktionsbedingten Ausschlag des Arretierbolzens 30 zur Verfügung. Bei Beginn der Verschiebung des Schiebeknopfes ergibt sich im Spielraum 50 ein Ausschlag des Arretierbolzens 30 beim Auftreffen des Kegelstumpfes 26 auf die durch den vorderen Bohrungsabschnitt 25a gebildete Stufe 34 und die nachfolgende Rampe, wobei gleichzeitig der Rastabschnitt 31 in den Verrundungsbereich der Rastkerbe 22 eintritt. Hier ist noch ein Lichtspalt 52 erkennbar (Figur 2).

Der Arretierbolzen 30 wird über die Schiebeknöpfe 28, 29 weiter nach vorn geschoben, wie dies in den Figuren 3 und 4c gezeigt ist, um den Zustand "lichtspaltfrei" zu erreichen. Hierfür taucht der Rastabschnitt 31 des Arretierbolzens 30 tiefer in die Rastkerbe 22 ein, nachdem die Schere weiter bis zum Aufsetzen des Messers 16 auf den Amboss 12 geschlossen wurde, wobei die Rastkerbe 22 sich dabei so weit mitdreht, dass der nach vorne geschobene Arretierbolzen 30 unter gleichzeitig zunehmender Hebelwirkung stehend nun seinerseits spielfrei in die Rastkerbe 22 eintaucht.

Nach dem Loslassen der Scherenschenkel 10, 14 bleibt dieser lichtspaltfreie Zustand erhalten, weil der Arretierbolzen 30 und dessen Rastabschnitt 31 gegen die Kraft der Öffnungsfeder durch die Haftreibung an der Kontaktstelle des Kegelabschnitts 26 und des kugelförmigen Endes 32 sicher verriegelt ist, wobei diese Verriegelung durch die Schiebeknopf-Anordnung und deren Rastnocken in der Endlage zusätzlich gesichert wird.

Der erste Scherenschenkel 14 übernimmt mit den zueinander parallel in einer Ebene versetzt zueinander liegenden Bohrungsabschnitten 25a, 25b, die parallel oder im Winkel zueinander verlaufen, die funktionelle Voraussetzung für dieses beschriebene bevorzugte Verriegelungsprinzip. Der hintere Bohrungsabschnitt 25b dient der Lagerung des kugelförmigen Endes 32 des Arretierbolzens 30, der vordere Bohrungsabschnitt 25a bildet mit einem zur Ebenenachse orthogonal stehenden Fenster oder Durchbruch zur Aufnahme des Blockes 38 eine Stufe (Rampenfunktion), über die der Arretierbolzen 30 mit seinem integrierten Kegelabschnitt 26 gleitet.

Bei Auftreten eines Spiels zwischen dem Messer und dem Amboss kann der Arretierbolzen über den Schiebeknopf weiter nach vorn geschoben werden. Die Spitze des Rastabschnitts hebt sich dann, wie oben bereits erwähnt, infolge der am Arretierbolzen vorhandenen "schiefen Ebene" (Konus bzw. Kegelstumpf) weiter und setzt dieser aus dem Öffnungsmoment resultierenden Öffnungskraft durch die Kräfte an der schiefen Ebene seinerseits eine Reaktionskraft entgegen. Dies führt dazu, dass das gesamte Spiel bzw. der Lichtspalt zwischen Messer und Amboss kompensiert wird. An der "schiefen Ebene" bzw. dem Konus herrscht Selbsthemmung. Erreicht wird dieser Effekt durch einen entsprechend schlanken Winkel und/oder durch reibungserhöhende Bereiche bzw. einen zusätzlichen Bauteil an dem Arretierbolzen. Um dieser öffnenden Kraftkomponente noch zusätzlichen Widerstand entgegenzusetzen, kann zudem auch an den Kontaktbereichen zwischen Schiebeknopf und Griffschale eine zusätzliche reibungserhöhende Ausbildung in Form von Kunststoffteilen oder einer Kunststoffbeschichtung angebracht werden, wie dies weiter oben erläutert wurde.

## Patentansprüche

1. Verriegelungsvorrichtung für Scheren, die erste und zweite über eine Gelenkachse (20) miteinander verbundene erste und zweite Scherenschenkel (10, 14) aufweisen, mit einem durch Hand betätigbaren Schiebeknopf (28, 29) und einer von diesem betätigbaren Zuhaltung, die die Scherenschenkel (10, 14) in Schließstellung entgegen der Kraft einer Öffnungsfeder sperrt, wobei die an dem ersten Scherenschenkel (14) angeordnete Zuhaltung (30) in eine Rastkerbe (22) einschiebbar ist, die in einem mit dem zweiten Scherenschenkel (10) verbundenen Teil ausgebildet ist, wobei die Zuhaltung durch einen langgestreckten Schieber (30) gebildet ist, der entlang seiner Längsachse (A) in einer Bohrung (25) in dem ersten Scherenschenkel (14) derart verschiebbar angeordnet ist, dass ein vorderer Rastabschnitt (31) des Schiebers (30) in der Schließstellung der Schere in die Rastkerbe (22) einschiebbar ist,
**dadurch gekennzeichnet, dass** Mittel vorgesehen sind, die den Schieber (30) bei seiner Vorschubbewegung um eine zur Gelenkachse (20) parallele Achse verschwenken und die Spitze seines Rastabschnittes (31) gegen eine Kante der Rastkerbe (22) drücken, um die Schere in ihre Schließstellung vorzuspannen.

2. Verriegelungsvorrichtung nach Anspruch 1,
**dadurch gekennzeichnet, dass** der Schieber in Form eines Arretierbolzens ausgebildet ist und die Mittel zur Verschwenkung des Arretierbolzens (30) eine Stufe (34) in der den Arretierbolzen (30) führenden Bohrung (25a, 25b) aufweisen, auf der der Arretierbolzen (30) bei seiner Verschiebung mit einem Kegelabschnitt (26) aufläuft.

3. Verriegelungsvorrichtung nach Anspruch 1,
**dadurch gekennzeichnet, dass** der Arretierbolzen (30) in zwei in einer Ebene achsparallel versetzt liegenden Bohrungsabschnitten (25a. 25b) geführt ist, zwischen denen die Stufe (34) gebildet ist, durch die der Arretierbolzen (30) bei axialer Verschiebung seine Schwenkbewegung um den Mittelpunkt seines kugelförmig ausgebildeten hinteren Endes (32) durchführt.

4. Verriegelungsvorrichtung nach den Ansprüchen 1 und 3.
**dadurch gekennzeichnet, dass** die ersten und zweiten Bohrungsabschnitte (25a, 25b) erste bzw. zweite Mittelachsen umfassen, die in einer zur Gelenkachse (20) unter einem rechten Winkel stehenden und sich durch den ersten Scherenschenkel erstreckenden Ebene achsparallel derart versetzt angeordnet sind, dass die Verlängerung der Mittelachse des ersten Bohrungsabschnittes (25a) einen größeren Abstand von der Gelenkachse (20) aufweist als der zweite Bohrungsabschnitt (25b), dass der Arretierbolzen (30) einen Schaft mit einem von der Gelenkachse (20) abgewandten hinteren kugelförmigen Ende (32) mit einem Außendurchmesser, der dem Innendurchmesser des zweiten Bohrungsabschnittes (25b) entspricht, und einen vorderen Rastabschnitt (31) umfasst, der mit Radialspiel in dem ersten Bohrungsabschnitt (25a) angeordnet und mit dem Schaft über den sich leicht konisch erweiternden Kegelabschnitt (26) verbunden ist, der beim Vorschub des Arretierbolzens (30) in die Rastkerbe (22) über die zwischen den ersten und zweiten Bohrungsabschnitten (25a, 25b) gebildete Stufe (34) derart läuft, dass der Arretierbolzen (30) um eine zur Gelenkachse (20) parallele Achse (B) des kugelförmigen Endes (32) verschwenkt wird und die Spitze des Rastabschnittes (31) gegen eine Kante der Rastkerbe (22) gedrückt wird.

5. Verriegelungsvorrichtung nach einem der vorhergehenden Ansprüche,
**dadurch gekennzeichnet, dass** der Arretierbolzen (30) aus einem Drehteil besteht.

6. Verriegelungsvorrichtung nach einem der Ansprüche 1 bis 4,
**dadurch gekennzeichnet, dass** der Arretierbolzen (30) aus einem flächigen Bauteil besteht.

7. Verriegelungsvorrichtung nach einem der Ansprüche 4 bis 6,
**dadurch gekennzeichnet, dass** der an die Stufe (34) angrenzende Teil des vorderen Bohrungsabschnittes (25a) rampenartig ausgebildet ist, wobei der sich leicht konisch erweiternde Kegelabschnitt (26) des Arretierbolzens (30) stärker konisch ausgestaltet ist als die Rampe.

8. Verriegelungsvorrichtung nach einem der Ansprüche 3 bis 7,
**dadurch gekennzeichnet, dass** an dem hinteren kugelförmigen Ende (32) des Arretierbolzens (30) eine Haftreibung besteht.

9. Verriegelungsvorrichtung nach Anspruch 8,
**dadurch gekennzeichnet, dass** das kugelförmige Ende (32) zur Erhöhung der Haftreibung aus Kunststoff ausgebildet und/oder der zweite Bohrungsabschnitt (25b) entsprechend ausgekleidet ist.

10. Verriegelungsvorrichtung nach einem der vorhergehenden Ansprüche,
**dadurch gekennzeichnet, dass** der erste Berühungspunkt der Rastkerbe (22) mit dem Rastabschnitt (31) abgerundet ist.

11. Verriegelungsvorrichtung nach einem der vorhergehenden Ansprüche,
**dadurch gekennzeichnet, dass** der Arretierbolzen (30) an einem sich quer zur Ebene des ersten Scherenschenkels (14) erstreckenden Block (38) befestigt ist, der mit mindestens einem Schiebeknopf (28, 29) mit Rastnocken verbunden ist.

12. Verriegelungsvorrichtung nach Anspruch 11,
**dadurch gekennzeichnet, dass** der Block (38) schwenkbar beweglich an dem mindestens einen Schiebeknopf (28, 29) angeordnet ist.

## Claims

1. A locking device for shears having first and second shears legs (10, 14) connected together by way of a pivot pin (20), having a manually operable sliding knob (28, 29) and a retaining memberwhich is operable thereby and which locks the shears legs (10, 14) in a closed position against the force of an opening spring, wherein the retaining member (30) arranged on the first shears leg (14) can be pushed into a latching notch (22) provided in a part connected to the second shears leg (10), wherein the retaining member is formed by an elongate slider (30) arranged slidably along its longitudinal axis (A) in a bore (25) in the first shears leg (14) in such a way that a front latching portion (31) of the slider (30) can be pushed into the latching notch (22) in the closed position of the shears,
**characterised in that** there are provided means which pivot the slider (30) in its advance movement about an axis parallel to the pivot pin (20) and urge the tip of its latching portion (31) against an edge of the latching notch (22) to bias the shears into the closed position thereof.

2. A locking device according to claim 1 **characterised in that** the slider is in the form of an arresting pin and the means for pivoting the arresting pin (30) have a step (34) in the bore (25a, 25b) guiding the arresting pin (30), on which the arresting pin (30) runs in its displacement with a cone portion (26).

3. A locking device according to claim 1 **characterised in that** the arresting pin (30) is guided in two bore portions (25a, 25b) which are disposed in displaced axis-parallel relationship in one plane and between which is formed the step (34) by which the arresting pin (30) upon axial displacement performs its pivotal movement about the centre point of its rear end (32) which is of a spherical configuration.

4. A locking device according to claims 1 and 3 **characterised in that** the first and second bore portions (25a, 25b) include first and second centre lines respectively which are arranged in a plane at a right angle to the pivot pin (20) and extending through the first shears leg in displaced axis-parallel relationship such that the prolongation of the centre line of the first bore portion (25a) is at a greater spacing from the pivot pin (20) than the second bore portion (25b), that the arresting pin (30) includes a shank with a rear spherical end (32) that is remote from the pivot pin (20) and that is of an outside diameter corresponding to the inside diameter of the second bore portion (25b), and a front latching portion (31) which is arranged with radial play in the first bore portion (25a) and is connected to the shank by way of the slightly conically enlarging conical portion (26) which in the advance movement of the arresting pin (30) into the latching notch (22) passes over the step (34) formed between the first and second bore portions (25a, 25b) in such a way that the arresting pin (30) is pivoted about an axis (B), parallel to the pivot pin (20), of the spherical end (32) and the tip of the latching portion (31) is urged against an edge of the latching notch (22).

5. A locking device according to one of the preceding claims **characterised in that** the arresting pin (30) comprises a turned portion.

6. A locking device according to one of claims 1 to 4 **characterised in that** the arresting pin (30) comprises a flat component.

7. A locking device according to one of claims 4 to 6 **characterised in that** the part, adjoining the step (34), of the front bore portion (25a) is of a ramp-like configuration, wherein the slightly conically enlarging conical portion (26) of the arresting pin (30) is more greatly conical than the ramp.

8. A locking device according to one of claims 3 to 7 **characterised in that** there is static friction at the rear spherical end (32) of the arresting pin (30).

9. A locking device according to claim 8 **characterised in that** to increase the static friction the spherical end (32) is formed from plastic material and/orthe second bore portion (25a) is correspondingly lined.

10. A locking device according to one of the preceding claims **characterised in that** the first contact point of the latching notch (22) with the latching portion (31) is rounded.

11. A locking device according to one of the preceding claims **characterised in that** the arresting pin (30) is fixed to a block (38) which extends transversely to the plane of the first shears leg (14) and which is connected to at least one sliding knob (28, 29) with latching projections.

12. A locking device according to claim 11 **characterised in that** the block (38) is arranged pivotably movably on the at least one sliding knob (28, 29).

## Revendications

1. Dispositif de verrouillage pour des sécateurs qui présentent une première et une deuxième branches de sécateur (10, 14) reliées entre elles par l'intermédiaire d'un axe d'articulation (20), avec un bouton coulissant (28, 29) pouvant être actionné à la main et avec un moyen de blocage pouvant être actionné par ce bouton, moyen qui bloque les branches de sécateur (10, 14) en position fermée à l'encontre de la force d'un ressort d'ouverture, sachant que le moyen de blocage (30), disposé sur la première branche de sécateur (14), peut être inséré dans une encoche de crantage (22) qui est formée dans une pièce assemblée à la deuxième branche de sécateur (10), et sachant que le moyen de blocage (30) est formé par un coulisseau oblong (30) qui est disposé à coulissement le long de son axe longitudinal (A) dans un perçage (25) dans la première branche de sécateur (14) de telle sorte qu'une partie de crantage avant (31) du coulisseau (30) peut, dans la position fermée du sécateur, être insérée dans l'encoche de crantage (22), **caractérisé en ce qu'**il est prévu des moyens qui font pivoter le coulisseau (30) lors de son mouvement d'avancement autour d'un axe parallèle à l'axe d'articulation (20) et qui pressent la pointe de sa partie de crantage (31) contre un bord de l'encoche de crantage (22), afm de précontraindre le sécateur dans sa position fermée.

2. Dispositif de verrouillage selon la revendication 1, **caractérisé en ce que** le coulisseau est réalisé sous la forme d'un boulon d'arrêt, et les moyens pour faire pivoter le boulon d'arrêt (30) présentent un gradin (34) dans le perçage (25a, 25b) guidant le boulon d'arrêt (30), gradin sur lequel le boulon d'arrêt (30) monte par une partie conique (26) lors de son coulissement.

3. Dispositif de verrouillage selon la revendication 1, **caractérisé en ce que** le boulon d'arrêt (30) est guidé dans deux parties de perçage (25a, 25b) disposées décalées en parallélisme axial dans un plan, entre lesquelles est formé le gradin (34) par lequel le boulon d'arrêt (30), lors du coulissement axial, effectue son mouvement de pivotement autour du centre de son extrémité arrière (32) réalisée sphérique.

4. Dispositif de verrouillage selon les revendications 1 et 3, **caractérisé en ce que** la première et la deuxième parties de perçage (25a, 25b) présentent respectivement un premier et un deuxième axes médians, qui sont disposés décalés, en parallélisme axial dans un plan perpendiculaire à l'axe d'articulation (20) et passant par la première branche de sécateur, de telle sorte que le prolongement de l'axe médian de la première partie de perçage (25a) présente une plus grande distance par rapport à l'axe d'articulation (20) que la deuxième partie de perçage (25b), et **en ce que** le boulon d'arrêt (30) comprend un corps ayant une extrémité arrière conique (32), éloignée de l'axe d'articulation (20) et dont le diamètre extérieur correspond au diamètre intérieur de la deuxième partie de perçage (25b), et comprend une partie de crantage avant (31), qui est disposée avec jeu radial dans la première partie de perçage (25a) et qui est reliée au corps via une partie conique (26) s'élargissant de façon légèrement conique, laquelle, lors de l'avancement du boulon d'arrêt (30) dans l'encoche de crantage (22), monte sur le gradin (34), formé entre la première et la deuxième parties de perçage (25a, 25b), de telle sorte que le boulon d'arrêt (30) est pivoté autour d'un axe (B) de l'extrémité sphérique (32) qui est parallèle à l'axe d'articulation (20), et que la pointe de la partie de crantage (31) est pressée contre un bord de l'encoche de crantage (22).

5. Dispositif de verrouillage selon l'une des revendications précédentes, **caractérisé en ce que** le boulon d'arrêt (30) consiste en une pièce usinée au tour.

6. Dispositif de verrouillage selon l'une des revendications 1 à 4, **caractérisé en ce que** le boulon d'arrêt (30) consiste en un élément plan.

7. Dispositif de verrouillage selon l'une des revendications 4 à 6, **caractérisé en ce que** la portion de la partie de perçage avant (25a) qui est limitrophe du gradin (34) est réalisée à la manière d'une rampe, sachant que la partie conique (26) du boulon d'arrêt (30) s'élargissant de façon légèrement conique est réalisée avec une plus grande conicité que la rampe.

8. Dispositif de verrouillage selon l'une des revendications 3 à 7, **caractérisé en ce qu'**il existe un frottement par adhérence à l'extrémité sphérique arrière (32) du boulon d'arrêt (30).

9. Dispositif de verrouillage selon la revendication 8, **caractérisé en ce que** l'extrémité sphérique arrière (32) est réalisée en matière plastique afin d'augmenter le frottement par adhérence, et/ou la deuxième partie de perçage (25b) est revêtue en conséquence.

10. Dispositif de verrouillage selon l'une des revendications précédentes, **caractérisé en ce que** le premier point de contact de l'encoche de crantage (22) avec la partie de crantage (31) est arrondi.

11. Dispositif de verrouillage selon l'une des revendications précédentes, **caractérisé en ce que** le boulon d'arrêt (30) est fixé sur un bloc (38) s'étendant transversalement au plan de la première branche de sécateur (14), bloc qui est relié à au moins un bouton coulissant (28, 29) par des ergots de crantage.

12. Dispositif de verrouillage selon la revendication 11, **caractérisé en ce que** le bloc (38) est disposé sur le bouton coulissant au moins unique (28, 29) en étant mobile en pivotement.
